(19) Europäisches Patentamt / European Patent Office / Office européen des brevets

(11) **EP 3 285 079 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **16184321.4**

(22) Anmeldetag: **16.08.2016**

(51) Int Cl.:
*G01R 31/34* (2020.01)   *H02H 7/06* (2006.01)
*H02H 3/027* (2006.01)   *H02H 3/093* (2006.01)
*H02H 3/00* (2006.01)   *H02H 3/42* (2006.01)
*H02H 3/44* (2006.01)   *H02H 7/22* (2006.01)
*H02H 7/26* (2006.01)   *H02H 1/04* (2006.01)
*H02P 9/00* (2006.01)   *H02H 3/10* (2006.01)
*H02J 3/38* (2006.01)   *H02J 13/00* (2006.01)

(54) **SCHUTZVERFAHREN ZUM SCHÜTZEN EINES GENERATORS ODER KRAFTWERKSBLOCKS SOWIE SCHUTZEINRICHTUNG ZUR DURCHFÜHRUNG EINES SOLCHEN VERFAHRENS**

METHOD FOR PROTECTING A GENERATOR OR POWER PLANT BLOCK AND PROTECTIVE DEVICE FOR CARRYING OUT SUCH A METHOD

PROCEDE DE PROTECTION D'UN GENERATEUR OU D'UNE TRANCHE DE REACTEUR NUCLEAIRE ET DISPOSITIF DE PROTECTION DESTINE A EXECUTER UN TEL PROCEDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.02.2018 Patentblatt 2018/08**

(73) Patentinhaber: **Siemens Aktiengesellschaft 80333 München (DE)**

(72) Erfinder:
• **Eisenburger, Edmund**
  **91058 Erlangen (DE)**
• **Herrmann, Hans-Joachim**
  **91459 Markt Erlbach (DE)**
• **Trunk, Kai**
  **91056 Erlangen (DE)**

(56) Entgegenhaltungen:
**DE-A1-102010 042 609      DE-A1-102011 115 243**

• **None**

**Beschreibung**

Die Erfindung bezieht sich auf ein Schutzverfahren zum Schützen eines an ein Energieverteilnetz oder eine Energieübertragungsleitung angeschlossenen elektrischen Generators oder Kraftwerksblockes.

Ein solches Schutzverfahren ist beispielsweise vom Siemens Schutzgerät SIPROTEC 7UM62 bekannt. Bei dem vorbekannten Verfahren wird auf einen generatornahen Kurzschluss im Energieverteilnetz oder auf der Energieübertragungsleitung geschlossen und ein Kurzschlusserkennungssignal erzeugt, wenn ein Satz an vorgegebenen Auslösebedingungen erfüllt ist. Der Generator wird von dem Energieverteilnetz oder der Energieübertragungsleitung getrennt, falls nach dem Erzeugen des Kurzschlusserkennungssignals die Auslösebedingungen zum Zeitpunkt des Ablaufs einer vorgegebenen Verzögerungszeit immer noch erfüllt sind.

Aus der DE 10 2010 042 609 A1 ist ein Verfahren zum Betreiben einer Schutzanordnung für ein Niederspannungsnetz bekannt, bei dem eine Last über mindestens zwei Schalter gegen Kurzschlüsse geschützt wird, wobei die Schalter mit einer Staffelzeit derart betrieben werden, dass im Kurzschlussfall möglichst nur derjenige Schalter auslöst, der dem Kurzschluss am nächsten liegt.

Der Erfindung liegt die Aufgabe zugrunde, ein Schutzverfahren anzugeben, das einen guten Schutz des Generators bzw. Kraftwerksblocks erlaubt und gleichzeitig ein vorzeitiges Trennen des Generators bzw. Kraftwerksblocks vom Netz vermeidet.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die Verzögerungszeit eine variable Zeitspanne ist, die vor ihrem Ablauf in Abhängigkeit vom Betriebsverlauf nach Kurzschlusseintritt regelmäßig oder unregelmäßig neu festgelegt wird, und der Generator von dem Energieverteilnetz oder der Energieübertragungsleitung getrennt wird, falls die Auslösebedingungen zum Zeitpunkt des Ablaufs der jeweils aktuell festgelegten Verzögerungszeit erfüllt sind.

Ein wesentlicher Vorteil des erfindungsgemäßen Verfahrens ist darin zu sehen, dass es dieses in sehr einfacher Weise ermöglicht, beispielsweise die Größe der Wirkleistungsreduktion nach Auftreten eines Kurzschlusses zu berücksichtigen. Tritt ein Kurzschluss auf, so reduziert sich die Wirkleistungsabgabe des Generators abrupt; dies hat wiederum zur Folge, dass sich die Winkelgeschwindigkeit des Läufers des Generators linear ändert und der Polradwinkel quadratisch mit der Fehlerdauer ansteigt. Bricht die Spannung am Netzanschlusspunkt jedoch nicht völlig zusammen, wenn also ein Fehler mit Restspannung auftritt, so kann während des Fehlers noch Wirkleistung an das Netz abgegeben werden und der Anstieg des Polradwinkels ist langsamer.

Auf dieser erfinderseitigen Erkenntnis beruht die erfindungsgemäß vorgesehene Maßnahme, die Verzögerungszeit betriebsabhängig anzupassen, also keine fest vorgegebene Verzögerungszeit heranzuziehen, sondern eine variable, die den Betriebsbedingungen nach dem Kurzschluss Rechnung trägt. Mit anderen Worten ist es möglich, die Entscheidung, ob eine Trennung des Generators bzw. Kraftwerksblocks vom Energieverteilnetz bzw. der Energieübertragungsleitung erfolgen soll oder nicht, betriebsabhängig zu treffen. Durch ein Heranziehen von beispielsweise der Wirkleistungsentwicklung und durch das Vorsehen einer variablen Verzögerungszeit lässt sich in vorteilhafter Weise beispielsweise vermeiden, dass der Generator bzw. Kraftwerksblock zu früh oder zu spät vom Netz getrennt wird: Zum Beispiel kann der Generator im Falle eines Kurzschlusses, bei dem nur ein geringer Kurzschlussstrom auftritt und der Polradwinkel des Läufers nur langsam ansteigt, länger am Netz als bei einem großen Kurzschlussstrom bleiben, wodurch wiederum die Chance steigt, dass der Kurzschluss behoben wird, bevor die Trennung vom Netz vorgenommen werden muss.

Vorzugsweise wird ein Zeitglied gestartet, wenn das Kurzschlusserkennungssignal vorliegt, sei es unmittelbar nach dem Vorliegen des Kurzschlusserkennungssignals oder zu einem vorgegebenen Zeitpunkt danach. Der Generator wird bevorzugt von dem Energieverteilnetz oder der Energieübertragungsleitung getrennt, falls eine vom Zeitglied ausgegebene Zeitangabe der aktuell festgelegten Verzögerungszeit entspricht oder diese überschreitet und zu diesem Zeitpunkt die Auslösebedingungen erfüllt sind.

Vorteilhaft ist es, wenn die Verzögerungszeit in Abhängigkeit von der jeweiligen Leistungsdifferenz zwischen der Leistung vor dem Erkennen des Kurzschlusses, insbesondere vor dem Erzeugen des Kurzschlusserkennungssignals, und der Leistung zum jeweils aktuellen Zeitpunkt festgelegt wird.

Insbesondere ist es von Vorteil, wenn die Verzögerungszeit in Abhängigkeit von der jeweiligen Wirkleistungsdifferenz zwischen der Wirkleistung vor dem Erkennen des Kurzschlusses, insbesondere vor dem Erzeugen des Kurzschlusserkennungssignals, und der Wirkleistung zum jeweils aktuellen Zeitpunkt festgelegt wird. Wie bereits oben erwähnt, ist die Wirkleistungsreduktion ein unmittelbares Maß für den jeweiligen Polradfehlwinkel des Läufers, so dass die Wirkleistungsentnahme besonders gut geeignet ist, als Kriterium für den Abschaltzeitpunkt herangezogen zu werden.

Die Verzögerungszeit wird bevorzugt festgelegt, indem eine vorgegebene Formel, eine vorgegebene Kennlinie oder eine vorgegebene Tabelle, die einen Zusammenhang zwischen einem die jeweilige Leistungsdifferenz bzw. Wirkleistungsdifferenz angebenden Differenzwert und der dazu korrespondierenden vorgegebenen Verzögerungszeit festlegt, angewendet oder ausgelesen wird.

Bei einer bevorzugten Verfahrensvariante ist vorgesehen, dass das Zeitglied bei Vorliegen des Kurzschlusserkennungssignals gestartet wird und ein Stoppen und/oder Zurücksetzen des Zeitgliedes unterbleibt, wenn zu einem vorgegebenen späteren Zeitpunkt nach der Erzeugung des Kurzschlusserkennungssignals das Kurzschlusserkennungssignal zu dem vorgegebenen späteren Zeitpunkt immer noch vorliegt und die Wirkleistung zwischenzeitlich über ein vorgegebenes Maß eingebrochen ist, insbesondere wenn ein die zeitliche mathematische Ableitung der Wirkleistung nach der Zeit angebender Ableitungswert einen vorgegebenen negativen Schwellenwert unterschritten hat; andernfalls wird das Zeitglied gestoppt und/oder zurückgesetzt.

Bei einer anderen bevorzugten Verfahrensvariante ist vorgesehen, dass das Zeitglied verzögert gestartet wird, und zwar zu einem vorgegebenen späteren Zeitpunkt nach der Erzeugung des Kurzschlusserkennungssignals, wenn zu dem vorgegebenen späteren Zeitpunkt das Kurzschlusserkennungssignal immer noch vorliegt und die Wirkleistung zwischenzeitlich über ein vorgegebenes Maß eingebrochen ist, insbesondere wenn ein die zeitliche mathematische Ableitung der Wirkleistung nach der Zeit angebender Ableitungswert einen vorgegebenen negativen Schwellenwert unterschritten hat; andernfalls wird das Zeitglied nicht gestartet.

Der Satz an vorgegebenen Auslösebedingungen umfasst vorzugsweise eine, mehrere oder alle der folgenden Auslösebedingungen:

- die Auslösebedingung, dass die Mitsystemspannung einen vorgegebenen Mitsystemspannungsmindestwert unterschreitet,,
- die Auslösebedingung, dass die Leiterströme, oder zumindest einer von diesen, einen vorgegebenen Leitermaximalstromwert überschreiten,
- die Auslösebedingung, dass die Wirkleistung einen vorgegebenen Wirkleistungsminimalwert unterschreitet,
- die Auslösebedingung, dass die Wirkleistung zu einem vorherigen Zeitpunkt vor dem Vorliegen einer, mehrerer oder aller der anderen Auslösebedingungen einen vorgegebenen Wirkleistungssollwert erreicht oder überschritten hat,
- die Auslösebedingung, dass die drei Leiter-Leiter-Spannungen, auch bezeichnet als verkettete Spannung, einen Mindestspannungswert unterschreiten.

Die Erfindung bezieht sich darüber hinaus auf eine Schutzeinrichtung zum Schützen eines an ein Energieverteilnetz oder eine Energieübertragungsleitung angeschlossenen elektrischen Generators oder Kraftwerksblockes. Die Schutzeinrichtung umfasst: ein Kurzschlusserkennungsmodul, das auf einen Kurzschluss im Energieverteilnetz oder auf der Energieübertragungsleitung schließt und ein Kurzschlusserkennungssignal erzeugt, wenn ein Satz an vorgegebenen Auslösebedingungen erfüllt ist, und ein Abschaltmodul, das den Generator von dem Energieverteilnetz oder der Energieübertragungsleitung trennt oder ein dies initiierendes Abschaltsignal erzeugt, falls nach dem Erzeugen des Kurzschlusserkennungssignals die Auslösebedingungen zum Zeitpunkt des Ablaufs einer vorgegebenen Verzögerungszeit erfüllt sind, insbesondere bis zum Ablauf der vorgegebenen Verzögerungszeit erfüllt geblieben sind.

Bezüglich einer solchen Schutzeinrichtung ist erfindungsgemäß vorgesehen, dass ein Verzögerungszeitbestimmungsmodul vorhanden ist, das die Verzögerungszeit als variable Zeitspanne vor ihrem Ablauf in Abhängigkeit vom Betriebsverlauf nach Kurzschlusseintritt regelmäßig oder unregelmäßig neu festlegt, und das Abschaltmodul den Generator oder Kraftwerksblock von dem Energieverteilnetz oder der Energieübertragungsleitung trennt oder ein dies initiierendes Abschaltsignal erzeugt, falls die Auslösebedingungen zum Zeitpunkt des Ablaufs der jeweils aktuell festgelegten Verzögerungszeit erfüllt sind.

Bezüglich der Vorteile der erfindungsgemäßen Schutzeinrichtung sei auf die obigen Erläuterungen im Zusammenhang mit dem erfindungsgemäßen Verfahren verwiesen.

Als vorteilhaft wird es angesehen, wenn die Schutzeinrichtung eine Recheneinrichtung aufweist und das Kurzschlusserkennungsmodul, das Verzögerungszeitbestimmungsmodul und das Abschaltmodul Softwaremodule sind, mit denen die Recheneinrichtung programmiert ist.

Die Erfindung wird nachfolgend anhand von Ausführungsbeispielen näher erläutert; dabei zeigen beispielhaft

Figur 1 ein erstes Ausführungsbeispiel für eine erfindungsgemäße Schutzeinrichtung, anhand derer auch ein Ausführungsbeispiel für ein erfindungsgemäßes Schutzverfahren erläutert wird,

Figur 2 ein zweites Ausführungsbeispiel für eine erfindungsgemäße Schutzeinrichtung, anhand derer ein weiteres Ausführungsbeispiel für ein erfindungsgemäßes Schutzverfahren erläutert wird,

Figur 3 ein drittes Ausführungsbeispiel für eine erfindungsgemäße Schutzeinrichtung, bei der ein Leistungssprungüberprüfungsmodul fehlt, und

Figur 4 ein Ausführungsbeispiel für eine erfindungsgemäße Schutzeinrichtung, die eine Recheneinrichtung aufweist.

In den Figuren werden der Übersicht halber für identische oder vergleichbare Komponenten stets dieselben Bezugszeichen verwendet.

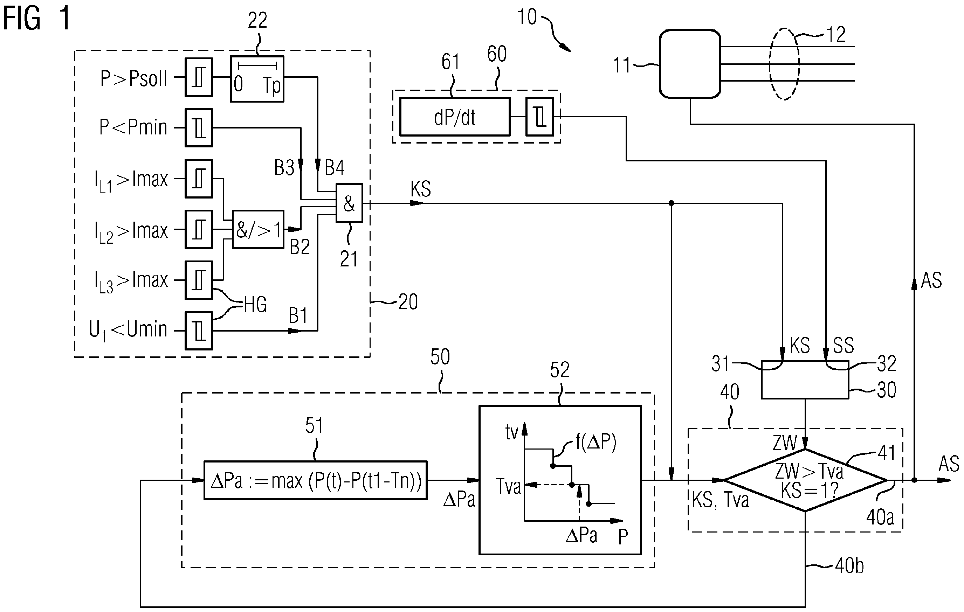

Die Figur 1 zeigt eine Schutzeinrichtung 10, die zum Schützen eines an ein Energieverteilnetz oder eine Energieübertragungsleitung angeschlossenen elektrischen Generators oder Kraftwerksblocks geeignet ist. Nachfolgend wird beispielhaft davon ausgegangen, dass die Schutzeinrichtung 10 einen Generator 11 schützt, der an ein Energieverteilnetz 12 angeschlossen ist.

Die Schutzeinrichtung 10 weist ein Kurzschlusserkennungsmodul 20 auf. Ein logisches UND-Glied 21 des Kurzschlusserkennungsmoduls 20 erzeugt ausgangsseitig ein Kurzschlusserkennungssignal KS, wenn ein Satz an vorgegebenen Auslösebedingungen erfüllt ist. Bei dem Ausführungsbeispiel gemäß Figur 1 wird beispielhaft davon ausgegangen, dass das logische UND-Glied 21 das Kurzschlusserkennungssignal KS erzeugt, wenn vier Auslösebedingungen B1, B2, B3 und B4 vorliegen.

Die Auslösebedingung B1 gilt als erfüllt, wenn die Mitsystemspannung U1 des Energieverteilnetzes 12 einen vorgegebenen Mitsystemspannungsmindestwert Umin unterschreitet.

Die Auslösebedingung B2 gilt als erfüllt, wenn die Leiterströme $I_{L1}$, $I_{L2}$ und $I_{L3}$ des Energieverteilnetzes 12 jeweils einen vorgegebenen Leitermaximalstromwert Imax überschreiten. Alternativ kann vorgesehen sein, dass die Auslösebedingung B2 als erfüllt gilt, wenn zumindest einer der Leiterströme $I_{L1}$, $I_{L2}$ und $I_{L3}$ den vorgegebenen Leitermaximalstromwert Imax überschreitet.

Die Auslösebedingung B3 gilt als erfüllt, wenn die Wirkleistung P, die der Generator 11 in das Energieverteilnetz 12 aktuell einspeist, einen vorgegebenen Wirkleistungsminimalwert Pmin unterschreitet.

Die Auslösebedingung B4 gilt als erfüllt, wenn die vom Generator bzw. Kraftwerksblock erzeugte Wirkleistung P zu einem vorherigen Zeitpunkt einen vorgegebenen Wirkleistungssollwert Psoll erreicht oder überschritten hat. Der vorherige Zeitpunkt liegt eine vorgegebene Zeitspanne Tp vor dem jeweils aktuellen Betrachtungszeitpunkt, zu dem das Vorliegen der übrigen Auslösebedingungen B1 bis B3 geprüft wird. Für die Prüfung der Auslösebedingung B4 wird vorzugsweise ein Rückfallverzögerungselement 22 eingesetzt, das die entsprechende Verzögerung um die Zeitspanne Tp durchführt. Die Zeitspanne Tp kann beispielsweise einige Netzperioden betragen und ist vorzugsweise größer als die maximal mögliche Verzögerungszeit Tva, die das Zeitbestimmungsglied 52 ausgibt bzw. ausgeben kann.

Das Kurzschlusserkennungsmodul 20 steht ausgangsseitig mit einem Starteingang 31 eines Zeitglieds 30 in Verbindung. Wird von dem Kurzschlusserkennungsmodul 20 das Kurzschlusserkennungssignal KS erzeugt und in den Starteingang 31 eingespeist, so wird das Zeitglied 30 gestartet.

Dem Zeitglied 30 nachgeordnet ist ein Abschaltmodul 40, das mit einem Ablaufprüfmodul 41 ausgestattet ist. Das Ablaufprüfmodul 41 ist eingangsseitig mit einem eine Zeitangabe bildenden Zeitwert ZW beaufschlagt, das vom Zeitglied 30 in das Abschaltmodul 40 eingespeist wird.

Mit dem Abschaltmodul 40 steht außerdem ein Verzögerungszeitbestimmungsmodul 50 sowie das Kurzschlusserkennungsmodul 20 in Verbindung.

Das Verzögerungszeitbestimmungsmodul 50 weist einen Differenzbildner 51 auf, der einen Wirkleistungsdifferenzwert ΔPa erzeugt gemäß folgender Formel:

$$\Delta Pa = \max(P(t) - P(t1 - Tn))$$

wobei P(t) die Wirkleistung zum jeweiligen Betriebszeitpunkt der Schutzeinrichtung 10 bzw. des Generators 11 und P(t1—Tn) die Wirkleistung zu einem vorherigen Zeitpunkt t1-Tn angibt. Der Zeitpunkt t1 gibt dabei den Zeitpunkt der Erzeugung des Kurzschlusserzeugungssignals KS an. Tn bezeichnet eine fest vorgegebene Zeitspanne, bei der es sich beispielsweise um die Netzperiodendauer des Energieverteilnetzes 11 handeln kann. P(t1-Tn) bezeichnet somit die Wirkleistung, die der Generator 11 erzeugt hat zu einem Zeitpunkt, der vor dem Zeitpunkt t1 des Erzeugens des Kurzschlusserzeugungssignals KS lag, und zwar die Zeitspanne Tn vorher.

Dem Differenzbildner 51 nachgeordnet ist ein Zeitbestimmungsglied 52 des Verzögerungszeitbestimmungsmoduls 50. In dem Zeitbestimmungsglied 52 ist eine Kennlinie f(ΔP) abgespeichert, die einen fest vorgebenen Zusammenhang zwischen dem jeweils vom Differenzbildner 51 festgestellten Wirkleistungsdifferenzwert ΔPa und einer Verzögerungszeit Tva festlegt, die das Ablaufprüfmodul 41 des Abschaltmoduls 40 zugrunde legen soll.

Das Zeitglied 30 weist darüber hinaus einen Stopp-Eingang 32 auf, an den ein Leistungssprungüberprüfungsmodul 60 angeschlossen ist. Durch Anlegen eines Stopp-Signals SS am Stopp-Eingang 32 des Zeitglieds 30 lässt sich das Zeitglied 30 stoppen und resetten bzw. auf Null setzen.

Das Leistungssprungüberprüfungsmodul 60 weist ein Sprungerkennungsmodul 61 auf, das die zeitliche mathematische Ableitung der Wirkleistung P nach der Zeit t bildet und einen entsprechenden Ableitungswert dP/dt bildet. Liegt ein Kurzschluss vor, so wird die Wirkleistung abrupt fallen und es wird ein Ableitungswert dP/dt auftreten, der eine vorgegebene negative Schwelle unterschreitet. Wird die negative Schwelle unterschritten, so geht das Leistungssprungüberprüfungsmodul 60 somit davon aus, dass tatsächlich ein Kurzschluss vorliegt und unternimmt nichts und lässt das Zeitglied 30 weiterlaufen.

Andernfalls, wenn also kein ausreichender großer negativer Wirkleistungssprung erkannt wurde, geht das Leistungssprungüberprüfungsmodul 60 davon aus, dass kein Kurzschluss vorliegt. In diesem Fall erzeugt sie ein Stoppsignal SS und speist dieses in den Stopp-Eingang 32 des Zeitglieds 30 ein, wodurch das Zeitglied gestoppt und die Ausgabe eines Abschaltsignals AS durch das Abschaltmodul unterbunden wird.

Das Leistungssprungüberprüfungsmodul 60 wird die Überprüfung dahingehend, ob der Ableitungswert dP/dt die vorgegebene negativen Schwelle unterschreitet oder unterschritten hat, vorzugsweise nach dem Erzeugen des Kurzschlusserkennungssignals KS durchführen, beispielsweise innerhalb einer Zeitspanne zwischen t1 und t1+Tn oder zum Zeitpunkt t1+Tn, wobei Tn - wie oben erwähnt - die Periodendauer der Netzfrequenz sein kann.

In der Figur 1 ist beispielhaft eine Vielzahl an Hysteresegliedern HG dargestellt, die bei der Prüfung der Auslösebedingungen B1, B2, B3, B4 sowie bei der Erzeugung des Stopp-Signals SS herangezogen werden. Die Hysteresglieder HG dienen dazu, ein "Schwingen" der Schutzeinrichtung 10 zu vermeiden.

Die Schutzeinrichtung 10 gemäß Figur 1 lässt sich wie folgt betreiben:

Das Kurzschlusserkennungsmodul 20 wertet die eingangsseitig anliegenden Messwerte, also die Mitsystemspannung U1, die Leiterströme $I_{L1}$, $I_{L2}$ und $I_{L3}$ sowie die Wirkleistung P aus und erzeugt ausgangsseitig das Kurzschlusserkennungssignal KS, wenn die vier Auslösebedingungen B1 bis B4 vorliegen. Bei der Überprüfung der Auslösebedingung B4 wird dabei die Zeitverzögerung durch das Verzögerungselement 22 berücksichtigt.

Nachfolgend wird beispielhaft davon ausgegangen, dass zu einem Zeitpunkt t1 das Kurzschlusserkennungssignal KS erzeugt wird und in das Zeitglied 30 eingespeist wird. Bei Anliegen des Kurzschlusserkennungssignals KS wird das Zeitglied 30 gestartet, das ausgangsseitig einen Zeitwert ZW erzeugt und in das Ablaufprüfmodul 41 des Abschaltmoduls 40 einspeist.

An dem Ablaufprüfmodul 41 liegt neben dem Zeitwert ZW das Kurzschlusserkennungssignal KS sowie der Verzögerungszeitwert Tva an, der vom Zeitbestimmungsglied 52 des Verzögerungszeitbestimmungsmoduls 50 erzeugt wurde.

Das Ablaufprüfmodul 41 erzeugt ausgangsseitig ein Abschaltsignal AS, mit dem ein Trennen des mit der Schutzeinrichtung 10 geschützten Generators 11 von dem daran angeschlossenen Energieverteilnetz 12 hervorgerufen wird, wenn der Zeitwert ZW größer ist als der Verzögerungszeitwert Tva des Zeitbestimmungsglieds 52 und wenn gleichzeitig immer noch das Kurzschlusserkennungssignal KS vorliegt (siehe Pfad 40a in Figur 1). Andernfalls wird die Schleife zur Bestimmung des Wirkleistungsdifferenzwerts ΔPa und der Verzögerungszeitwert Tva erneut durchlaufen (siehe Pfad 40b in Figur 1).

Der Verzögerungszeitwert Tva, den das Zeitbestimmungsglied 52 ausgibt, ist während der Durchführung des Verfahrens bzw. nach dem erstmaligen Erzeugen des Kurzschlusserkennungssignals KS zum Zeitpunkt t1 nicht konstant, sondern variabel. So lässt sich anhand der Kennlinie f(ΔP) des Zeitbestimmungsglieds 52 erkennen, dass bei einer Veränderung des Wirkleistungsdifferenzwerts ΔPa auch der Verzögerungswert Tva geändert wird. Der Verzögerungszeitwert Tva ist somit eine Funktion des jeweiligen Wirkleistungsdifferenzwerts ΔPa. Schwankt also die Wirkleistung bzw. der Wirkleistungsdifferenzwert ΔPa bezogen auf die Referenzwirkleistung zum Zeitpunkt t1-Tn, so schwankt der Verzögerungszeitwert Tva, was wiederum vom Ablaufprüfmodul 41 berücksichtigt wird.

Die Funktion des Leistungssprungüberprüfungsmoduls 60 besteht darin, nach dem Erzeugen des Kurzschlusserkennungssignals KS zu überprüfen, ob ein für einen Kurzschluss typischer negativer Leistungssprung aufgetreten ist und der Ableitungswert dP/dt die vorgegebene negative Schwelle unterschritten hat bzw. dessen Betrag den Betrag der negativen Schwelle überschritten hat. Ist dies der Fall, so lässt das Leistungssprungüberprüfungsmodul 60 das Zeitglied 30 weiterlaufen, weil es davon ausgeht, dass tatsächlich ein Kurzschluss aufgetreten ist.

Wird die negative Schwelle vom Ableitungswert dP/dt nicht unterschritten, so erzeugt das Sprungerkennungsmodul 61 unter Berücksichtigung der vom Hysteresglied HG vorgegebenen Hysterese ausgangsseitig das Stopp-Signal SS, mit dem das Zeitglied 30 gestoppt und auf Null gesetzt wird, weil das Sprungerkennungsmodul 61 davon ausgeht, dass tatsächlich kein Kurzschluss aufgetreten ist.

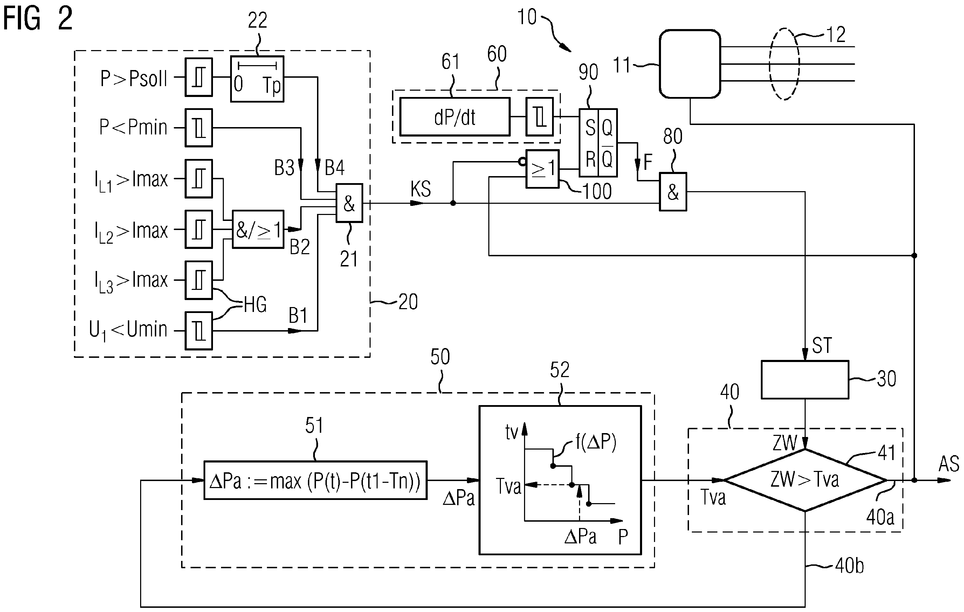

Die Figur 2 zeigt ein zweites Ausführungsbeispiel für eine Schutzeinrichtung 10, die zum Schützen eines an ein Energieverteilnetz oder eine Energieübertragungsleitung angeschlossenen elektrischen Generators 11 oder Kraftwerksblocks eingesetzt werden kann.

Die Schutzeinrichtung 10 weist ein Kurzschlusserkennungsmodul 20, ein Zeitglied 30, ein Abschaltmodul 40 sowie ein Verzögerungszeitbestimmungsmodul 50 auf, die den entsprechenden Modulen bei der Schutzeinrichtung 10 gemäß Figur 1 entsprechen können. Diesbezüglich sei somit auf die obigen Ausführungen im Zusammenhang mit der Figur 1 verwiesen.

Im Unterschied zu der Schutzeinrichtung 10 gemäß Figur 1 ist bei der Schutzeinrichtung 10 gemäß Figur 2 das Kurzschlusserkennungsmodul 20 nicht unmittelbar mit dem Zeitglied 30 verbunden, sondern nur mittelbar, und zwar über ein logisches UND-Glied 80. Das logische UND-Glied 80 ist eingangsseitig mit dem Kurzschlusserkennungsmodul 20 sowie einem Flip-Flop 90 verbunden.

Bei dem Flip-Flop 90 handelt es sich vorzugsweise um ein RS-Flip-Flop, das von dem vorgeordneten Leistungssprungüberprüfungsmodul 60 gesetzt bzw. eingeschaltet werden kann. Wird das Flip-Flop 90 eingeschaltet, so erzeugt es ausgangsseitig ein logisches Flip-Flop-Signal F mit einer logischen Eins, das am Eingang des logischen UND-Glieds 80 anliegt.

Ein Rücksetzen des Flip-Flops 90 kann über ein ODER-Glied 100 erfolgen, das über einen invertierenden Eingang mit dem Kurzschlusserkennungsmodul 20 und über einen nicht invertierenden Eingang mit dem Abschaltmodul 40 in Verbindung steht.

Die Schutzeinrichtung 10 gemäß Figur 2 kann wie folgt betrieben werden:

Erkennt das Kurzschlusserkennungsmodul 20 einen Kurzschluss, so erzeugt es ausgangsseitig das Kurzschlusserkennungssignal KS, das zum logischen UND-Glied 80 gelangt. Das logische UND-Glied 80 überprüft, ob das Flip-Flop-Signal F des Flip-Flops 90 eine logische Eins aufweist. Dies wäre der Fall, wenn zuvor das Leistungssprungüberprüfungsmodul 60 das Flip-Flop 90 eingeschaltet hätte.

Da das Kurzschlusserkennungssignal KS zum Zeitpunkt t1 erzeugt wird und das Leistungssprungüberprüfungsmodul 60 die Überprüfung des Ableitungswerts dP/dt erst verzögert zu einem Zeitpunkt nach dem Zeitpunkt t1, also in einer Zeitspanne zwischen t1 und t1+Tn oder zum Beispiel zum Zeitpunkt t1+Tn, durchführt, kann bei Erzeugen des Kurzschlusssignals KS das Flip-Flop 90 noch nicht gesetzt sein. Demgemäß wird das logische UND-Glied 80 das Kurschlusssignal KS zunächst nicht weiterleiten, so dass das Zeitglied 30 zunächst auch nicht gestartet wird.

Das Starten des Zeitglieds 30 erfolgt durch das logische UND-Glied 80 mittels eines Steuersignals ST erst,

- wenn das Sprungerkennungsmodul 61 einen negativen Wirkleistungssprung festgestellt hat und demgemäß das Flip-Flop 90 gesetzt hat, und wenn
- gleichzeitig immer noch das Kurzschlusserkennungssignal KS vorliegt.

Sobald das logische UND-Glied 80 das Zeitglied 30 gestartet hat, erzeugt dieses den Zeitwert ZW, der zum Ablaufprüfmodul 41 des Abschaltmoduls 40 gelangt. Das Ablaufprüfmodul 41 prüft anhand des jeweiligen Zeitwerts ZW, ob dieser die vom Zeitbestimmungsglied 52 des Verzögerungszeitbestimmungsmoduls 50 ausgegebene Verzögerungszeit Tva überschreitet oder nicht. Ist dies der Fall, so wird ausgangsseitig das Abschaltsignal AS erzeugt, andernfalls unterbleibt dies. Die Arbeitsweise des Verzögerungszeitbestimmungsmoduls 50 gemäß Figur 2 ist vorzugsweise mit der Arbeitsweise des Verzögerungszeitbestimmungsmoduls 50 gemäß Figur 1 identisch.

Bei dem Ausführungsbeispiel gemäß Figur 2 wird das Abschaltsignal AS auch zum Zurücksetzen des Flip-Flops 90 verwendet, denn bei Vorliegen des Abschaltsignals AS wird über das ODER-Glied 100 der Reseteingang des Flip-Flop 90 aktiviert. Sobald das Flip-Flop 90 zurückgesetzt worden ist, wird auch das Steuersignal ST abgeschaltet, was zu einem Stoppen bzw. Resetten des Zeitglieds 30 führt.

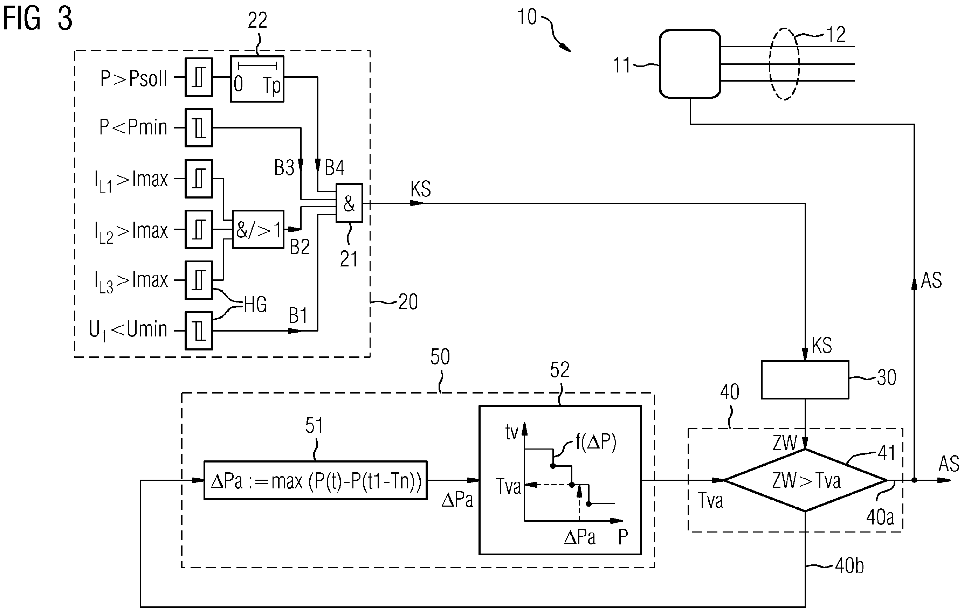

Die Figur 3 zeigt ein drittes Ausführungsbeispiel für eine Schutzeinrichtung 10, die zum Schützen eines an ein Energieverteilnetz oder eine Energieübertragungsleitung angeschlossenen elektrischen Generators 11 oder Kraftwerksblocks eingesetzt werden kann.

Bei der Ausführungsvariante gemäß Figur 3 fehlt das Leistungssprungüberprüfungsmodul 60; die Steuerung des Zeitglieds erfolgt lediglich über das Kurzschlusserkennungsmodul 20. Solange das Kurzschlusserkennungssignal KS vorliegt, ist das Zeitglied 30 aktiv und erzeugt ausgangsseitig einen ansteigenden Zeitwert ZW für das Abschaltmodul 40. Entfällt das Kurzschlusserkennungssignal KS, wird das Zeitglied 30 resettet.

Im Übrigen gelten die Ausführungen im Zusammenhang mit der Figur 1 entsprechend.

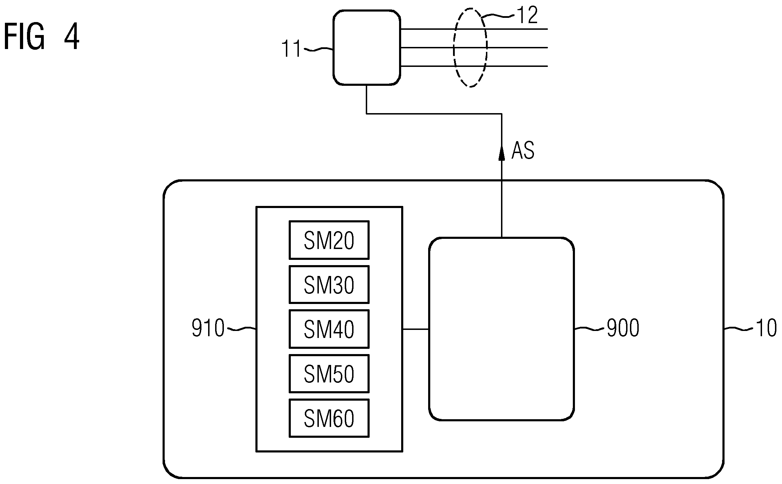

Die Figur 4 zeigt ein Ausführungsbeispiel für eine erfindungsgemäße Schutzeinrichtung 10, die eine Recheneinrichtung 900 und einen Speicher 910 aufweist. In dem Speicher 910 sind Softwaremodule gespeichert, mit denen die Recheneinrichtung 900 programmiert ist.

Das Kurzschlusserkennungsmodul 20, das Zeitglied 30, das Abschaltmodul 40, das Verzögerungszeitbestimmungsmodul 50 und das Leistungssprungüberprüfungsmodul 60 gemäß den Figuren 1 und 2 sind bei dem Ausführungsbeispiel gemäß Figur 4 durch Softwaremodule gebildet, die in der Figur 4 mit den Bezugszeichen SM20, SM30, SM40, SM50 und SM60 gekennzeichnet sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Schutzeinrichtung |
| 11 | Generator |
| 12 | Energieverteilnetz |
| 20 | Kurzschlusserkennungsmodul |
| 21 | UND-Glied |
| 22 | Verzögerungselement |
| 30 | Zeitglied |
| 31 | Starteingang |
| 32 | Stopp-Eingang |
| 40 | Abschaltmodul |
| 40a | Pfad |
| 40b | Pfad |
| 41 | Ablaufprüfmodul |
| 50 | Verzögerungszeitbestimmungsmodul |
| 51 | Differenzbildner |
| 52 | Zeitbestimmungsglied |
| 60 | Leistungssprungüberprüfungsmodul |
| 61 | Sprungerkennungsmodul |
| 80 | UND-Glied |
| 90 | Flip-Flop |
| 100 | ODER-Glied |
| 900 | Recheneinrichtung |
| 910 | Speicher |
| | |
| AS | Abschaltsignal |
| B1 | Auslösebedingung |
| B2 | Auslösebedingung |

B3          Auslösebedingung
B4          Auslösebedingung
dP/dt       Ableitungswert
F           Flip-Flop-Signal
HG          Hystereseglieder
$I_{L1}$    Leiterstrom
$I_{L2}$    Leiterstrom
$I_{L3}$    Leiterstrom
Imax        Leitermaximalstromwert
KS          Kurzschlusserkennungssignal
P           Wirkleistung
Pmin        Wirkleistungsminimalwert
Psoll       Wirkleistungssollwert
P(t)        Wirkleistung
P(t1-tn)    Wirkleistung
SM20        Softwaremodul
SM30        Softwaremodul
SM40        Softwaremodul
SM50        Softwaremodul
SM60        Softwaremodul
SS          Stopp-Signal
ST          Steuersignal
t           Zeit
t1          Zeitpunkt
t1-Tn       Zeitpunkt
t1+Tn       Zeitpunkt
Tn          fest vorgegebene Zeitspanne
Tp          Zeitspanne
Tva         Verzögerungszeit
U1          Mitsystemspannung
Umin        Mitsystemspannungsmindestwert
ZW          Zeitwert

$\Delta$Pa          Wirkleistungsdifferenzwert
f($\Delta$P)        Kennlinie

**Patentansprüche**

1.  Schutzverfahren zum Schützen eines an ein Energieverteilnetz (12) oder eine Energieübertragungsleitung angeschlossenen elektrischen Generators (11) oder Kraftwerksblockes, wobei bei dem Verfahren

    - auf einen generatornahen Kurzschluss im Energieverteilnetz (12) oder auf der Energieübertragungsleitung geschlossen und ein Kurzschlusserkennungssignal (KS) erzeugt wird, wenn ein Satz an vorgegebenen Auslösebedingungen (B1-B4) erfüllt ist, und
    - der Generator (11) von dem Energieverteilnetz (12) oder der Energieübertragungsleitung getrennt wird, falls nach dem Erzeugen des Kurzschlusserkennungssignals (KS) die Auslösebedingungen (B1-B4) zum Zeitpunkt des Ablaufs einer vorgegebenen Verzögerungszeit (Tva) erfüllt sind,

**dadurch gekennzeichnet, dass**

    - die Verzögerungszeit (Tva) eine variable Zeitspanne ist, die vor ihrem Ablauf in Abhängigkeit vom Betriebsverlauf nach Kurzschlusseintritt regelmäßig oder unregelmäßig neu festgelegt wird, wobei die Verzögerungszeit (Tva) in Abhängigkeit von der jeweiligen Leistungsdifferenz zwischen der Leistung vor dem Erkennen des Kurzschlusses, und der Leistung zum jeweils aktuellen Zeitpunkt festgelegt wird; und
    - der Generator (11) von dem Energieverteilnetz (12) oder der Energieübertragungsleitung getrennt wird, falls die Auslösebedingungen (B1-B4) zum Zeitpunkt des Ablaufs der jeweils aktuell festgelegten Verzögerungszeit (Tva) erfüllt sind.

2.  Verfahren nach Anspruch 1,
    **dadurch gekennzeichnet,** dass die Verzögerungszeit (Tva) in Abhängigkeit von der jeweiligen Wirkleistungsdifferenz ($\Delta$Pa) zwischen der Wirkleistung (P(t1-Tn)) vor dem Erkennen des Kurzschlusses, insbesondere vor dem Erzeugen des Kurzschlusserkennungssignals (KS), und der Wirkleistung (P(t)) zum jeweils aktuellen Zeitpunkt festgelegt wird.

3.  Verfahren nach einem der voranstehenden Ansprüche,
    **dadurch gekennzeichnet, dass** die Verzögerungszeit (Tva) festgelegt wird, indem eine vorgegebene Formel, eine vorgegebene Kennlinie (f($\Delta$Pa)) oder eine vorgegebene Tabelle, die einen Zusammenhang zwischen einem die jeweilige Leistungsdifferenz bzw. Wirkleistungsdifferenz ($\Delta$Pa) angebenden Differenzwert und der dazu korrespondierenden vorgegebenen Verzögerungszeit (Tva) festlegt, angewendet oder ausgelesen wird.

4.  Verfahren nach einem der vorangehenden Ansprüche,
    **dadurch gekennzeichnet, dass**

    - ein Zeitglied (30) gestartet wird, wenn das Kurzschlusserkennungssignal (KS) vorliegt, sei es unmittelbar nach dem Vorliegen des Kurzschlusserkennungssignals (KS) oder zu einem vorgegebenen Zeitpunkt danach, und
    - der Generator (11) von dem Energieverteilnetz (12) oder der Energieübertragungsleitung getrennt wird, falls eine vom Zeitglied (30) ausgegebene Zeitangabe (ZW) der aktuell festgelegten Verzögerungszeit (Tva) entspricht oder diese überschreitet und zu diesem Zeitpunkt die Auslösebedingungen (B1-B4) erfüllt sind.

5.  Verfahren nach Anspruch 4,
    **dadurch gekennzeichnet, dass**

- das Zeitglied (30) bei Vorliegen des Kurzschlusserkennungssignals (KS) gestartet wird und ein Stoppen und/oder Zurücksetzen des Zeitgliedes (30) unterbleibt, wenn zu einem vorgegebenen späteren Zeitpunkt nach der Erzeugung des Kurzschlusserkennungssignals (KS)

- das Kurzschlusserkennungssignal (KS) zu dem vorgegebenen späteren Zeitpunkt immer noch vorliegt und
- die Wirkleistung zwischenzeitlich über ein vorgegebenes Maß eingebrochen ist, insbesondere ein die zeitliche mathematische Ableitung der Wirkleistung nach der Zeit angebender Ableitungswert einen vorgegebenen negativen Schwellenwert unterschritten hat, und

- andernfalls das Zeitglied (30) gestoppt und/oder zurückgesetzt wird.

6. Verfahren nach Anspruch 4,
**dadurch gekennzeichnet, dass**

- das Zeitglied (30) verzögert gestartet wird, und zwar zu einem vorgegebenen späteren Zeitpunkt nach der Erzeugung des Kurzschlusserkennungssignals (KS), wenn

- zu dem vorgegebenen späteren Zeitpunkt das Kurzschlusserkennungssignal (KS) immer noch vorliegt und
- die Wirkleistung zwischenzeitlich über ein vorgegebenes Maß eingebrochen ist, insbesondere ein die zeitliche mathematische Ableitung der Wirkleistung nach der Zeit angebender Ableitungswert einen vorgegebenen negativen Schwellenwert unterschritten hat, und

- andernfalls das Zeitglied (30) nicht gestartet wird.

7. Verfahren nach einem der voranstehenden Ansprüche,
**dadurch gekennzeichnet, dass** der Satz an vorgegebenen Auslösebedingungen (B1-B4) eine, mehrere oder alle der folgenden Auslösebedingungen (B1-B4) umfasst:

- die Auslösebedingung (B1), dass die Mitsystemspannung (U1) einen vorgegebenen Mitsystemspannungsmindestwert unterschreitet,
- die Auslösebedingung (B2), dass die Leiterströme ($I_{L1}$, $I_{L2}$, $I_{L3}$) oder zumindest einer von diesen jeweils einen vorgegebenen Leitermaximalstromwert (Imax) überschreiten,
- die Auslösebedingung (B3), dass die Wirkleistung (P) einen vorgegebenen Wirkleistungsminimalwert (Pmin) unterschreitet,
- die Auslösebedingung (B4), dass die Wirkleistung (P) zu einem vorherigen Zeitpunkt vor dem Vorliegen einer, mehrerer oder aller der anderen Auslösebedingungen (B1-B4) einen vorgegebenen Wirkleistungssollwert (Psoll) erreicht oder überschritten hat,
- die Auslösebedingung, dass die Leiter-Leiter-Spannungen einen Mindestspannungswert unterschreiten.

8. Schutzeinrichtung (10) zum Schützen eines an ein Energieverteilnetz (12) oder eine Energieübertragungsleitung angeschlossenen elektrischen Generators (11) oder Kraftwerksblockes, wobei die Schutzeinrichtung (10) umfasst

- ein Kurzschlusserkennungsmodul (20), das auf einen Kurzschluss im Energieverteilnetz (12) oder auf der Energieübertragungsleitung schließt und ein Kurzschlusserkennungssignal (KS) erzeugt, wenn ein Satz an vorgegebenen Auslösebedingungen (B1-B4) erfüllt ist, und
- ein Abschaltmodul (40), das den Generator (11) von dem Energieverteilnetz (12) oder der Energieübertragungsleitung trennt oder ein dies initiierendes Abschaltsignal (AS) erzeugt, falls nach dem Erzeugen des Kurzschlusserkennungssignals (KS) die Auslösebedingungen (B1-B4) zum Zeitpunkt des Ablaufs einer vorgegebenen Verzögerungszeit (Tva) erfüllt sind,

**dadurch gekennzeichnet, dass**

- ein Verzögerungszeitbestimmungsmodul (50) vorhanden ist, das die Verzögerungszeit (Tva) als variable Zeitspanne vor ihrem Ablauf in Abhängigkeit vom Betriebsverlauf nach Kurzschlusseintritt regelmäßig oder unregelmäßig neu festlegt, wobei das Verzögerungszeitmodul (50) die Verzögerungszeit (Tva) in Abhängigkeit von der jeweiligen Leistungsdifferenz zwischen der Leistung vor dem Erkennen des Kurzschlusses, und der Leistung zum jeweils aktuellen Zeitpunkt festlegt; und
- das Abschaltmodul (40) den Generator (11) oder Kraftwerksblock von dem Energieverteilnetz (12) oder der Energieübertragungsleitung trennt oder ein dies initiierendes Abschaltsignal (AS) erzeugt, falls die Auslösebedingungen (B1-B4) zum Zeitpunkt des Ablaufs der jeweils aktuell festgelegten Verzögerungszeit (Tva) erfüllt sind.

9. Schutzeinrichtung (10) nach Anspruch 8,
**dadurch gekennzeichnet, dass**

- die Schutzeinrichtung (10) eine Recheneinrichtung (900) aufweist und
- das Kurzschlusserkennungsmodul (20), das Verzögerungszeitbestimmungsmodul (50) und das Abschaltmodul (40) Softwaremodule (SM20, SM50 und SM40) sind, mit denen die Recheneinrichtung (900) programmiert ist.

**Claims**

1. Protection method for protecting an electrical generator (11) or power station unit connected to a power distribution network (12) or to a power transmission line, wherein, in the method,

   - a short circuit near the generator in the power distribution network (12) or on the power transmission line is detected, and a short-circuit detection signal (KS) is generated, when a set of predetermined trigger conditions (B1-B4) is satisfied, and
   - the generator (11) is disconnected from the power distribution network (12) or the power transmission line if, after generation of the short-circuit detection signal (KS), the trigger conditions (B1-B4) are satisfied at the instant when a predetermined delay time (Tva) elapses,

   **characterized in that**

   - the delay time (Tva) is a variable duration which is reestablished regularly or irregularly before it elapses, as a function of the operating profile after the short-circuit occurrence, the delay time (Tva) is established as a function of the respective power difference between the power before detection of the short circuit and the power at the respective current instant; and
   - the generator (11) is disconnected from the power distribution network (12) or the power transmission line if the trigger conditions (B1-B4) are satisfied at the instant when the respectively currently established delay time (Tva) elapses.

2. Method according to Claim 1, **characterized in that** the delay time (Tva) is established as a function of the respective active power difference ($\Delta$Pa) between the active power (P(t1-Tn)) before detection of the short circuit, in particular before generation of the short-circuit detection signal (KS), and the active power (P(t)) at the respective current instant.

3. Method according to one of the preceding claims, **characterized in that** the delay time (Tva) is established by applying or reading out a predetermined formula, a predetermined characteristic curve (f($\Delta$Pa)) or a predetermined table which establishes a relationship between a difference value indicating the respective power difference or active power difference ($\Delta$Pa) and the predetermined delay time (Tva) corresponding thereto.

4. Method according to one of the preceding claims, **characterized in that**

   - a timer (30) is started when the short-circuit detection signal (KS) occurs, either immediately after the occurrence of the short-circuit detection signal (KS) or at a predetermined instant thereafter, and
   - the generator (11) is disconnected from the power distribution network (12) or the power transmission line if a time indication (ZW) output by the timer (30) corresponds to or exceeds the currently established delay time (Tva) and the trigger conditions (B1-B4) are satisfied at this instant.

5. Method according to Claim 4, **characterized in that**

   - the timer (30) is started upon occurrence of the short-circuit detection signal (KS), and stopping and/or resetting of the timer (30) is suppressed when, at a predetermined subsequent instant after generation of the short-circuit detection signal (KS),

     - the short-circuit detection signal (KS) is still present at the predetermined subsequent instant and
     - the active power has in the meantime dropped by more than a predetermined extent, in particular a derivative value indicating the mathematical time derivative of the active power as a function of time has fallen below a predetermined negative threshold value, and

   - otherwise the timer (30) is stopped and/or reset.

6. Method according to Claim 4, **characterized in that**

   - the timer (30) is started with a delay, specifically at a predetermined subsequent instant after generation of the short-circuit detection signal (KS), when

     - the short-circuit detection signal (KS) is still present at the predetermined subsequent instant and

- the active power has in the meantime dropped by more than a predetermined extent, in particular a derivative value indicating the mathematical time derivative of the active power as a function of time has fallen below a predetermined negative threshold value, and

- otherwise the timer (30) is not started.

7. Method according to one of the preceding claims, **characterized in that**
the set of predetermined trigger conditions (B1-B4) comprises one, several or all of the following trigger conditions (B1-B4) :

- the trigger condition (B1) that the positive-sequence voltage (U1) falls below a minimum predetermined positive-sequence voltage value,
- the trigger condition (B2) that the phase currents ($I_{L1}$, $I_{L2}$, $I_{L3}$), or at least one thereof, respectively exceed a predetermined maximum phase current value (Imax),
- the trigger condition (B3) that the active power (P) falls below a predetermined minimum active power value (Pmin),
- the trigger condition (B4) that the active power (P) has reached or exceeded a predetermined active-power setpoint value (Psoll) at a previous instant before the occurrence of one, several or all of the other trigger conditions (B1-B4),
- the trigger condition that the phase-to-phase voltages fall below a minimum voltage value.

8. Protective device (10) for protecting an electrical generator (11) or power station unit connected to a power distribution network (12) or to a power transmission line, wherein the protective device (10) comprises

- a short-circuit detection module (20), which detects a short circuit in the power distribution network (12) or on the power transmission line and generates a short-circuit detection signal (KS) when a set of predetermined trigger conditions (B1-B4) is satisfied, and
- a breaking module (40), which disconnects the generator (11) from the power distribution network (12) or the power transmission line, or generates a breaking signal (AS) which initiates this, if, after generation of the short-circuit detection signal (KS), the trigger conditions (B1-B4) are satisfied at the instant when a predetermined delay time (Tva) elapses,

**characterized in that**

- a delay time determination module (50) is provided, which reestablishes the delay time (Tva) as a variable duration regularly or irregularly before it elapses, as a function of the operating profile after the short-circuit occurrence, wherein the delay time module (50) establishes the delay time (Tva) as a function of the respective power difference between the power before detection of the short circuit and the power at the respectively current instant; and
- the breaking module (40) disconnects the generator (11) or power station unit from the power distribution network (12) or the power transmission line, or generates a breaking signal (AS) which initiates this, if the trigger conditions (B1-B4) are satisfied at the instant when the respectively currently established delay time (Tva) elapses.

9. Protective device (10) according to Claim 8, **characterized in that**

- the protective device (10) comprises a computing device (900), and
- the short-circuit detection module (20), the delay time determination module (50) and the breaking module (40) are software modules (SM20, SM50 and SM40), with which the computing device (900) is programmed.

**Revendications**

1. Procédé de protection pour la protection d'un générateur (1) électrique ou d'un bloc de central raccordé à un réseau (12) de distribution d'énergie ou à une ligne de transport d'énergie, procédé dans lequel

- on ferme un court-circuit proche du générateur dans le réseau (12) de distribution d'énergie ou sur la ligne de transport d'énergie et on produit un signal (KS) de détection de court-circuit si un ensemble de conditions (B1 à B4) de déclenchement données à l'avance est satisfait, et
- on sépare le générateur (11) du réseau (12) de distribution d'énergie ou de la ligne de transport d'énergie si, après la production du signal (KS) de détection de court-circuit, les conditions (B1 à B4) de déclenchement sont satisfaites à l'instant d'expiration d'un temps (Tva) de temporisation donné à l'avance,

**caractérisé en ce que**

- le temps (Tva) de temporisation est un laps de temps variable, que l'on refixe régulièrement ou irrégulièrement avant son expiration en fonction du déroulement du fonctionnement après l'apparition du court-circuit, dans lequel on fixe le temps (Tva) de temporisation en fonction de la différence de puissance respective entre la puissance avant la détection du court-circuit et la puissance à l'instant en cours respectivement ; et

- on sépare le générateur (11) du réseau (12) de distribution d'énergie ou de la ligne de transport d'énergie, si les conditions (B1 à B4) de déclenchement sont satisfaites à l'instant de l'expiration du temps (Tva) de temporisation fixé en cours.

2. Procédé suivant la revendication 1,
   **caractérisé en ce que**
   l'on fixe le temps (Tva) de temporisation en fonction de la différence (ΔPa) de puissance active respective entre la puissance (P(t1-Tn) active avant la détection du court-circuit, notamment avant la production du signal (KS) de détection du court-circuit, et la puissance (P(t)) active à l'instant en cours respectivement.

3. Procédé suivant l'une des revendications précédentes,
   **caractérisé en ce que**
   on fixe le temps (Tva) de temporisation en appliquant ou en lisant une formule donnée à l'avance, une courbe (f(ΔPa)) caractéristique donnée à l'avance ou une table donnée à l'avance, qui fixe une relation entre une valeur de différence, indiquant la différence de puissance respective ou la différence (ΔPa) de puissance active, et le temps (Tva) de temporisation donné à l'avance y correspondant.

4. Procédé suivant l'une des revendications précédentes,
   **caractérisé en ce que**

   - on fait débuter une minuterie (30) s'il y a le signal (KS) de détection de court-circuit que ce soit directement après la présence du signal (KS) de détection du court-circuit ou à un instant après donné à l'avance, et
   - on sépare le générateur (11) du réseau (12) de distribution d'énergie ou de la ligne de transport d'énergie, si une indication (ZW) de temps, émise par la minuterie (30), correspond au temps (Tva) de temporisation fixé en cours ou le dépasse et si à cet instant les conditions (B1 à B4) de déclenchement sont satisfaites.

5. Procédé suivant la revendication 4,
   **caractérisé en ce que**

   - on fait débuter la minuterie (30) en présence du signal (KS) de détection d'un court-circuit et on interdit un arrêt et/ou une remise à l'état initial de la minuterie (30), si à un instant ultérieur donné à l'avance après la production du signal (KS) de détection d'un court-circuit

   - le signal (KS) de détection d'un court-circuit est encore présent à l'instant ultérieur donné à l'avance et
   - la puissance active a diminué intermédiairement dans une mesure donnée à l'avance, notamment une valeur de dérivée indiquant la dérivée mathématique en fonction du temps de la puissance active dans le temps est passée en dessous d'une valeur de seuil négative donnée à l'avance, et

   - sinon on arrête la minuterie (30) et/ou on la remet à l'état initial.

6. Procédé suivant la revendication 4,
   **caractérisé en ce que**

   - on fait débuter la minuterie (30) de manière retardée et cela à un instant ultérieur donné à l'avance après la production du signal (KS) de détection d'un court-circuit, si

      - à l'instant ultérieur donné à l'avance, le signal (KS) de détection d'un court-circuit est encore présent, et
      - la puissance active a diminué intermédiairement dans une mesure donnée à l'avance, notamment une valeur de dérivée indiquant la dérivée mathématique en fonction du temps de la puissance active dans le temps est passée en dessous d'une valeur de seuil négative donnée à l'avance, et

   - sinon on ne fait pas débuter la minuterie (30).

7. Procédé suivant l'une des revendications précédentes,
   **caractérisé en ce que**
   l'ensemble de conditions (B1 à B4) de déclenchement données à l'avance comprend une, plusieurs ou toutes les conditions (B1 à B4) de déclenchement suivantes :

   - la condition (B1) de déclenchement que la tension (U1) de système direct est inférieure à une valeur minimum de tension de système direct donné à l'avance,
   - la condition (B2) de déclenchement que les courants ($I_{L1}$, $I_{L2}$, $I_{L3}$) de conducteur ou au moins l'un de ceux-ci dépassent respectivement une valeur ($I_{max}$) de courant maximum de conducteur donnée à l'avance,
   - la condition (B3) de déclenchement que la puissance (P) active est inférieure à une valeur (Pmin) minimum de puissance active donnée à l'avance,

- la condition (B4) de déclenchement que la puissance (P) active à un instant antérieur avant la présence d'une, de plusieurs ou de toutes les autres conditions (B1 à B4) de déclenchement a atteint ou a dépassé une valeur (Psoll) de consigne de puissance active donnée à l'avance,

- la condition de déclenchement que les tensions conducteur-conducteur passent en dessous d'une valeur de tension minimum.

8. Dispositif (10) de protection pour la protection d'un générateur (1) électrique ou d'un bloc (2) central raccordé à un réseau (12) de distribution d'énergie ou à une ligne de transport d'énergie, dans lequel le dispositif (10) de protection comprend

    - un module (20) de détection d'un court-circuit, qui ferme un court-circuit dans le réseau (12) de distribution d'énergie sur la ligne de transport d'énergie et produit un signal (KS) de détection d'un court-circuit, si un ensemble de conditions (B1 à B4) de déclenchement données à l'avance est satisfait, et

    - un module (40) d'interruption, qui sépare le générateur (11) du réseau (12) de distribution d'énergie ou de la ligne de transport d'énergie ou produit un signal (AS) d'interruption d'initiation, si après la production du signal (KS) de détection d'un court-circuit, les conditions (B1 à B4) de déclenchement sont satisfaites à l'instant de l'expiration d'un temps (Tva) de temporisation donné à l'avance,

**caractérisé en ce que**

    - il y a un module (50) de détermination d'un temps de temporisation qui refixe régulièrement ou irrégulièrement le temps (Tva) de temporisation comme laps de temps variable avant son expiration en fonction du déroulement du fonctionnement après l'apparition du court-circuit, dans lequel le module (50) de temps de temporisation fixe le temps (Tva) de temporisation en fonction de la différence de puissance respective entre la puissance avant la détection du court-circuit et la puissance à l'instant en cours respectivement ; et

    - le module (40) d'interruption sépare le générateur (11) ou le bloc de central du réseau (12) de distribution d'énergie ou de la ligne de transport d'énergie ou produit un signal (AS) d'interruption faisant débuter cela, si les conditions (B1 à B4) de déclenchement sont satisfaites à l'instant de l'expiration du temps (Tva) de temporisation fixé en cours.

9. Dispositif (10) de protection suivant la revendication 8,

**caractérisé en ce que**

    - le dispositif (10) de protection a un dispositif (900) informatique et

    - le module (20) de détection d'un court-circuit, le module (50) de détermination d'un temps de temporisation et le module (40) d'interruption sont des modules (SM20, SM50 et SM40) logiciels, par lesquels le dispositif (900) informatique est programmé.

FIG 1

FIG 2

FIG 3

FIG 4

EP 3 285 079 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010042609 A1